# EUROPEAN PATENT SPECIFICATION

(11) **EP 3 873 867 B1**
(45) Date of publication and mention of the grant of the patent: **22.11.2023**
(21) Application number: 19805862.0
(22) Date of filing: 31.10.2019
(51) Int. Cl.: C04B 14/02, C09C 1/56, C09C 1/48, C04B 28/02, C04B 103/54

(54) **MASONRY COMPOSITIONS COMPRISING CHEMICALLY TREATED CARBON PIGMENTS**
MAUERWERKZUSAMMENSETZUNGEN MIT CHEMISCH BEHANDELTEN KOHLENSTOFFPIGMENTEN
COMPOSITIONS DE MAÇONNERIE COMPRENANT DES PIGMENTS DE CARBONE TRAITÉS CHIMIQUEMENT

(30) Priority: 31.10.2018 US 201862753462 P; 05.07.2019 US 201962870868 P
(43) Date of publication of application: 08.09.2021
(73) Proprietor: CABOT CORPORATION, Boston, Massachusetts 02210-2019 (US)
(72) Inventor: HERRERA FERNANDEZ, Miguel A., Cincinnati, Ohio 45209 (US); ZHANG, Qingling, Beverly Hills, Michigan 48025 (US); NGUYEN, Lang H., Billerica, Massachusetts 01821 (US); LAROCHELLE RICHARD, Lynne K., Littleton, Massachusetts 01460 (US); DUPNIK, Benjamin, Billerica, Massachusetts 01821 (US); MATHEW, John, Billerica, Massachusetts 01821 (US); BURGER, Koenraad C.J., 3197 KA Rotterdam (NL); MOESER, Geoffrey D., Billerica, Massachusetts 01821 (US)
(74) Representative: Grünecker Patent- und Rechtsanwälte PartG mbB
(86) International application number: PCT/US2019/059158
(87) International publication number: WO 2020/092765

(56) References cited:
- WO-A1-96/18689
- WO-A2-2015/006620

## Description

This invention relates to mineral binder systems containing pigments and, in particular, to masonry systems such as concrete that include chemically treated carbon black as a colorant.

### BACKGROUND

Mineral binder (masonry) systems used to form items such as concrete, cement, mortar and plaster formulations are often colored to enhance their aesthetic appeal. Coloring can be accomplished either by applying a suitable coating to the exposed surfaces or by adding small amounts of one or more pigments to the mineral binder system to color the mix. Since surface coatings are subject to peeling, fading and weathering, the latter method of coloring is often preferred. A pigment or pigments can be added either to the dry mineral mix, for example, in the case of concrete to the cement-sand mixture, or to the water used to set such a mix. Black pigments are often used as colorants in mineral binder systems because a large variety of colors and color shades can be obtained by their use, either alone or in combination with other pigments. Black pigments can be organic or inorganic and include iron oxides, which are the most prevalent black pigment in use today.
The use of carbon blacks in masonry compositions is described in U.S. Patent No. 5,575,845, corresponding to WO 96/18689 A1.. The production of stir-in blacks is described in US9803099, corresponding to WO 2015/006620 A2. In particular, WO 2015/006620 A2 discloses an aqueous carbon black millbase, an aqueous carbon black liquid coating and a method of making the millbase and the liquid coating, wherein the carbon black has an STSA between 20 and 300 m²/g as measured prior to treatment.

### SUMMARY OF THE INVENTION

In one embodiment, a pigmented masonry composition is provided.

The masonry composition of the present invention comprises a mineral binder and a chemically treated carbon black product evenly dispersed throughout the composition, the chemically treated carbon black comprising a carbon black having attached an organic group including an ionic or an ionizable group, the ionic or ionizable group being present at a level from 1.0 to 3.0 µmol/m² (based on the STSA prior to treatment) wherein the carbon black has an STSA between 20 and 300 m²/g as measured prior to treatment.

The chemically treated carbon black may be present at a level from 1 to 20% by weight, for example, from 1% to 10% by weight. The masonry composition may exhibit a jetness (L*) of at most 33, for example, at most 25 or at most 20. The carbon black may have an STSA of at most 250 m²/g or at most 200 m²/g, for example, from 50 to 200 m²/g, as measured prior to treatment. The jetness of the composition may remain below 33, for example, at most 25 or at most 20 after 400 hours at 100% humidity.

The ionic or ionizable group may comprise a sulfonic acid group, a phosphonic acid group, or a carboxylic acid group. The chemically treated carbon black may have an average primary particle size of from 15-50 nm. The organic group may include an aryl group.

In another embodiment, a method of making a pigment masonry composition includes mixing a dry mixture of cement and aggregate with a powdered or pelletized chemically treated carbon black to produce a pigmented mixture, the chemically treated carbon black including an organic group comprising an ionic or ionizable group, the ionic or ionizable group being present at a level from 1.0 to 3.0 µmol/m² (based on the STSA prior to treatment), wherein the carbon black has an STSA between 20 and 300 m²/g as measured prior to treatment and mixing the pigmented mixture with water to produce a slurry.

Alternatively or in addition, a method of making a pigment masonry composition includes mixing an uncured masonry slurry with a chemically treated carbon black to form a pigmented mixture, the chemically treated carbon black having attached an organic group including an ionic or an ionizable group, the ionic or ionizable group being present at a level from 1.0 to 3.0 µmol/m² (based on the STSA prior to treatment), wherein the carbon black has an STSA between 20 and 300 m²/g as measured prior to treatment. The chemically treated carbon black may be in the form of a powder or pellets. The chemically treated carbon black may be in the form of an aqueous dispersion.

Alternatively or in addition, a method of making a pigmented masonry composition includes combining a mixture of cement and aggregate with an aqueous dispersion of chemically treated carbon black to produce a pigmented mixture, the chemically treated carbon black including an organic group comprising an ionic or ionizable group, the ionic or ionizable group being present at a level from 1.0 to 3.0 µmol/m² (based on the STSA prior to treatment), wherein the carbon black has an STSA between 20 and 300 m²/g as measured prior to treatment.

In any of these alternatives, the chemically treated carbon black may be present in the aqueous dispersion at a level of at least about 25% by weight, for example, at least about 30% by weight based on the final weight of the dispersion, the liquid phase of the dispersion comprising greater than 90% water by weight and less than 5 g of dispersant per 100 g carbon black.

Any of these methods may further include preparing the dispersion of chemically treated carbon black by stirring an undispersed modified carbon black dry powder free from milling media into an aqueous vehicle at a concentration of at least about 25% by weight, for example, at least about 30% by weight, based on the final weight of the dispersion, to form a carbon black dispersion, the aqueous vehicle comprising a solvent that includes greater than 90% water by weight and less than 5 g of dispersant per 100 g carbon black.

In any of these methods, less than 10% by volume of the modified carbon black in the dispersion may have a particle size of greater than 0.5 µm. In any of these methods, the concentration of modified carbon black in the dispersion may be up to 45% by weight. In any of these methods, the dispersion may be mixed using only low shear stirring or mixing. In any of these methods, the mixture of cement and aggregate may be a slurry further comprising water. Any of these methods may further include adding water to the mixture of cement and aggregate either before or during combining.

In any of these methods, the aqueous dispersion of chemically treated carbon black may include all the water necessary to mix and set the mixture of cement and aggregate. In any of these methods, the amount of chemically treated carbon black may be from 1 to 20% by weight, for example, from 1% to 10% by weight based on the total dry weight of the pigmented mixture. In any of these methods, the pigmented mixture, following setting, may exhibit a jetness (L*) of at most 33, for example, at most 25 or at most 20. In any of these methods, the carbon black may have an STSA of at most 250 m²/g or at most 200 m²/g, for example, from 50 to 200 m²/g, as measured prior to treatment. In any of these methods, the ionic or ionizable group may include a sulfonic acid group, a phosphonic acid group, or a carboxylic acid group. In any of these methods, the organic group may include an aryl group. Any of these methods may further include allowing the pigmented slurry to set.

### BRIEF DESCRIPTION OF THE DRAWINGS

The above-mentioned and other features of this disclosure, and the manner of attaining them, will become more apparent and better understood by reference to the following description of embodiments described herein taken in conjunction with the accompanying drawings, wherein:
FIGS. 1A and 1B are photographs illustrating pigment dispersion in a known sample compared to a sample made with the carbon blacks disclosed herein;
FIG. 2 provides graphical results showing the effect of humidity on three masonry samples containing 6% pigment by weight;
FIG. 3 provides graphical results showing the effect of humidity on two masonry samples containing 1% pigment by weight; and
FIG. 4 provides graphical results showing the effect of humidity on three masonry samples containing 17% pigment by weight.
FIG. 5 is a photograph illustrating three concrete samples prepared with different pigments.
FIG. 6 provides graphical results of jetness (L*) with respect to loading of various pigments in masonry samples.
FIG. 7 is a series of photographs illustrating air bubble formation at the surface of masonry samples pigmented with various surface treated carbon blacks.

### DETAILED DESCRIPTION

The present invention relates to a mineral binder composition including chemically treated carbon black products having an attached organic group that includes an ionic or ionizable group, the ionic or ionizable group being present at a treatment level from 1.0 to 3.0 mol/m² based on the STSA of the carbon black prior to treatment. Compared to conventional pigments, the chemically treated carbon black products, when incorporated in a mineral binder system, offer superior properties including improved weathering, color consistency, heat absorption and jetness. The chemically treated carbon blacks can be provided in powder or pellet form, or in an aqueous dispersion. The carbon blacks can be dispersed using low shear stirring techniques and do not require high energy milling in order to achieve stable dispersions. The chemically treated carbon blacks described herein are particularly compatible with masonry products because of properties including alkaliresistance, lightfastness and dispersibility.

Colored cements have been gaining popularity due to aesthetics and additional functionalities. For example, black cement can absorb sunlight more effectively, and thus ice and snow melt faster from its surface. This would be highly beneficial for airport runways, for instance. Currently, most black cements use iron oxide as the coloring agent. Iron oxide has good coloring characteristics, but exhibits poor acid resistance (e.g., during acid rain or in other environments having a pH less than 7.0). Moreover, it is necessary to mix a large amount of iron oxide with the cement in order to increase the degree of blackness. As a result, the amount of water to be added when mixing iron oxide with cement slurry is also increased, whereby the strength of the cement product is decreased.

Unlike iron oxide, carbon black would not be discolored in an acidic environment. Moreover, since carbon black has better color characteristics, it suffices to mix only a small amount (about 1/5 of typical usage of iron oxide) with masonry components. Unfortunately, carbon black has low dispersibility in water because of its surface characteristics, which makes it very difficult to disperse homogeneously in the cement slurry. Moreover, when carbon black is used in powder form, it inhibits the hardening of cement. Finally, over time carbon black separates from the cement matrix after hardening due to low adhesion to the cement matrix. This separation can weaken the cement structure.

While untreated carbon blacks exhibit excellent coloring properties, alkaliresistance, lightfastness and chemical stability, they are not preferred in mineral binder systems exposed to outdoor weathering. Weathering studies show that the surface appearance of bodies containing untreated carbon black undesirably changes as the weathering process progresses. When the system contains only carbon black as the coloring pigment, the surface fades. When the carbon black is used in combination with other colorants, the appearance of the other colorants become more pronounced. This change in carbon black-pigmented mineral systems has been attributed to the leaching out and washing away of the carbon black pigment particles, which are very small relative to the other ingredients. This preferential leaching has limited the use of carbon blacks in systems exposed to outdoor weathering or other sources of water or abrasion.

Some forms of carbon black are either very dusty and/or difficult to disperse in uncured masonry binder compositions. The process used for incorporating the carbon black into a binder system depends on both the form in which the pigment is supplied and the processing equipment available to the user. As produced, carbon blacks are powdery materials with bulk densities ranging from about 0.02 to 0.1 g/cc and are termed fluffy blacks. Such blacks are very dusty. Because of their low densities and large surface areas, the fluffy products are cohesive, have very poor conveying properties and are therefore difficult to handle in bulk. For this reason, fluffy products have limited utility and are generally supplied in bagged form. To improve the bulk handling properties of carbon blacks and reduce their dustiness, fluffy blacks are typically densified by various pelletizing procedures to attain bulk densities ranging from about 0.2 to 0.7 g/cc. For a given grade of carbon black, handling properties tend to improve with increasing degrees of densification. Dispersibility, on the other hand, is progressively degraded as the extent of densification is increased. Thus there is a tradeoff between improvement in bulk handling properties and degradation in dispersibility. Because of the advantages of increased cleanliness, however, pelletized carbon blacks are often used for introducing carbon blacks into mineral binder systems. Alternatively, dispersions of carbon black can break the tradeoff between dispersibility and bulk handling safety.

Carbon black can be added to mineral binder systems in a variety of ways. It can be milled into the dry sand-cement mixture, for example, and then the requisite amount of water necessary for setting the mix can be added. Alternately, an aqueous dispersion of the carbon black, including all or part of the requisite volume of water necessary for setting the mix, can be uniformly blended into the sand-cement mixture. Alternatively or in addition, a highly concentrated dispersion of carbon black can be added to an aqueous sand-cement slurry. In any of these embodiments, for full and uniform color development, the carbon black agglomerates must be broken down to yield primarily individual aggregates (the smallest dispersible units of carbon black, composed of primary particles). This is accomplished either by milling the dry mixture or by predispersing the carbon black in the aqueous medium. Since carbon blacks tend to be hydrophobic, surface active agents are often used to promote wetting. In addition, the presence of such an agent in the aqueous medium can enhance the dispersion process and aid dispersion stabilization. The chemically modified carbon blacks described herein can be used in pelletized form yet easily disperse with low shear stirring and less readily wash out of the system during weathering. Alternatively, they can be prepared in stable aqueous dispersions which are easily mixed into masonry slurries

Dispersants such as sulfonated naphthalene-based dispersants and polycarboxylic acid have been used to disperse carbon blacks for cement applications, but the dispersants are physically adsorbed onto carbon black and are not chemically attached. The carbon blacks described herein are chemically treated blacks that via a chemical reaction, such as diazonium treatment, increase hydrophilicity and therefore the dispersibility of the carbon black in the uncured masonry composition. The chemically treated carbon blacks can be added as powder, granules, or liquid dispersion in water. When an aqueous dispersion of the chemically treated carbon black is used, the concentration of carbon black in the dispersion can be high enough that the amount of water does not exceed the preferred water/cement ratio when the slurry is prepared with a target pigment loading. In one embodiment, a mineral binder composition incorporates carbon black products comprising a carbon black having attached (not merely associated with) an organic group comprising an ionic or an ionizable group, the ionic or ionizable group being present at a level from 1.0 to 3.0 µmol/m² based on the STSA of the carbon black prior to attachment of the organic group. The organic group can be a polymer or a non-polymer, preferably a non-polymer. Organic groups are considered chemically attached (or directly attached) to a carbon black particle when rinsing with deionized water is ineffective at removing the organic groups from the carbon black. Rinsing is ineffective if, after an equivalent volume of deionized water at room temperature is filtered through the treated carbon black, less than 25% by weight of the organic groups are removed.

Suitable mineral binder (masonry) systems include concrete, cement, mortar, and exterior plaster formulations. Other mineral binder systems may similarly benefit from the teachings herein. Any conventionally known additives for mineral binder systems may be incorporated in the mineral binder systems of the present invention. Typical concrete compositions are produced with cement, water, and aggregate. Cement is a binding agent containing, e.g., lime, calcium, silica, and/or aluminosilicates. Portland cement and other cements compositions are well known to those of skill in the art. Aggregate is typically a mixture of finely crushed stone, sand, and/or grit and coarser materials such as glass, stone and/or gravel. Other additives such as air entraining agents, plasticizers, defoamers, and/or hardening accelerators or retarders may also be used. The use of carbon blacks in masonry compositions is described in U.S. Patent No. 5,575,845 titled CARBON BLACK PRODUCTS FOR COLORING MINERAL BINDERS.

In one set of embodiments, it has been found that chemically treated carbon blacks modified to include an organic group comprising an ionic or ionizable group, the ionic or ionizable group being present at a treatment level from 1.0 to 3.0 µmol/m² based on the STSA of the untreated blackcan be used to produce masonry materials with a welldistributed pigment that exhibits weathering resistance and provides good color and jetness over time. Such carbon blacks may be dispersed in aqueous media for ease of handling and to facilitate dispersion of the carbon black in the concrete. Use of such chemically treated carbon blacks also reduces the precipitation of calcium carbonate at the concrete surface that creates white staining, detracting from the aesthetics of the black surface of the concrete. Furthermore, use of such chemically treated carbon blacks reduces air entrainment in the concrete with respect to more heavily treated carbon blacks. Air reduces the strength of the concrete and air bubbles in the surface of the concrete result in unsightly voids and can accelerate wear or cracking of the concrete.

It has been found that the use of a "stir-in" chemically treated carbon black can provide color and weathering resistance along with additional processing advantages. As used herein, a "stir-in" carbon black is a modified carbon black that does not need to be bead milled in order to be stably dispersed in an aqueous vehicle. Stir-in carbon blacks can provide stable dispersions after being stirred into aqueous systems without the need for high speed milling. This means that highly loaded millbases (at least 10% or 15% pigment by weight) can be produced directly by mixing fluffy or pelletized carbon black into an aqueous vehicle. Alternatively or in addition, even more highly loaded dispersions (at least 20% or at least 25% pigment by weight) may be produced with minimal use of dispersant. Such highly loaded dispersions reduce the amount of water that will be added to the concrete with the pigment, providing greater flexibility in production of concrete. The production of stir-in blacks is described in US9803099, titled CARBON BLACK FOR WATERBORNE COATINGS.

In one aspect, a chemically treated (modified) carbon black is stirred into an aqueous vehicle to produce a liquid aqueous (waterborne) dispersion. In preferred embodiments, the modified carbon black can be dispersed directly into the aqueous vehicle without energy intensive milling that is typically required to disperse unmodified carbon blacks in aqueous vehicles and have relatively low concentrations of attached functional groups and may require no, or minimal, amounts of dispersants in the aqueous vehicle. For instance, the treated carbon blacks may be modified at a treating agent concentration of at least 1.0, 1.3, 1.5 or 2 µmol/m² and at most 3.0, 2.7, 2.5, or 2 µmol/m² based on the STSA of the untreated black. Where the treating agent has two ionic or ionizable groups, it is the ionic or ionizable group that is present at these levels.

In one set of methods, undispersed dry chemically treated carbon black powder can be mixed directly into an aqueous dispersion formulation, eliminating the intermediate step of making a millbase that is subsequently let down in an aqueous vehicle to produce an aqueous dispersion. In another set of embodiments, a low viscosity millbase is made with a high concentration of modified carbon black and can then be let down to produce an aqueous dispersion for use in producing a masonry slurry. Alternatively or in addition, the millbase itself is metered into the masonry slurry or added in conjunction with the fluid component of the masonry slurry. In other embodiments, the carbon black can be dry mixed with cement or aggregate and will be adequately dispersed when water is added to prepare the slurry. In additional embodiments the chemically treated carbon black can be added in either dry or dispersion form to the slurry after it is prepared and ready for application/casting and curing.

As used herein, the solvent in an aqueous or waterborne liquid dispersion includes at least 90% water by weight and in many cases the solvent system is greater than 95% or greater than 99% water by weight. Similarly, the aqueous or waterborne liquid dispersion can include greater than 50%, greater than 80% or greater than 90% water by weight based on the entire mass of the aqueous or waterborne liquid dispersion.

The chemically modified carbon blacks described herein possess properties that can eliminate the need for high energy bead milling. A stirring or stir-in process does not require the addition of glass beads or other media that must be filtered out of the resulting dispersion. Stirring may be done using a mixer, such as, for example, a paddle mixer or a high speed mixer. Stirring can require less energy than conventional bead milling, meaning that dispersions or emulsions will not be destroyed by the high energy milling process. In many embodiments, the power required to disperse the modified carbon black particles is less than 100 watts, less than 70 watts, less than 50 watts or less than 40 watts for a 200 g sample, and stable dispersions can be achieved in less than three hours, less than two hours or less than one hour at these power levels. In some embodiments, the speed of the mixer can be limited to a mixing blade tip speed of less than 10 m/s, less than 5 m/s, less than 3 m/s or less than or equal to 2 m/s. Stirring need not raise the temperature of the dispersion like bead milling can. For example, in some embodiments, the stirring process will raise the temperature of the liquid vehicle by less than 10°C, less than 5°C or less than 1°C . In contrast, milling processes can raise the temperature of the liquid vehicle by greater than 10 °C, which can result in a number of problems, including gelling of the mixture.

The modified carbon black particles described herein can remain dispersed in an aqueous system for months or years. As used herein, a stable dispersion is a dispersion in which there is no statistically significant decrease in the hiding power on stainless steel of a coating made from the dispersion at a loading of 1% carbon black, by weight, after aging the dispersion for one week at elevated temperature, e.g., 52°C. If the dispersion contains greater than 1% modified carbon black by weight, such as in the case of a millbase, the dispersion is aged and subsequently let down in an aqueous vehicle including a compatible resin to 1% carbon black by weight to test the hiding power on stainless steel. When dry, the coating will include about 3% carbon black by weight. As used herein, a "letdown" includes liquid dispersions made by diluting a millbase as well as liquid dispersions made directly by dispersing an undispersed pigment into a liquid vehicle.

In one set of embodiments, a modified carbon black pigment can be stirred directly into an aqueous liquid vehicle to produce a stable dispersion. This dispersion may include, for example, greater than 10%, greater than 20%, greater than 30%, greater than 40% or greater than 50% by weight of chemically modified carbon black. This dispersion can then be mixed into a dry or wet masonry composition such as concrete or clay. The chemically modified carbon blacks can also be mixed into a dry system in fluffy or pelletized form and can be mixed into cement powder before or after the introduction of any aggregate.

In some applications, the carbon blacks are provided in an aqueous dispersion having a low viscosity so that it can be easily incorporated into the pumping systems that are currently used to mix concrete. By metering the addition of a known stable dispersion into the mix, the exact amount of water and pigment being added can be predetermined. This also allows for letting down the dispersion with water (or water with additives such as CaCl₂) to arrive at the desired amount of pigment and water for the slurry with a single homogeneous source of water and pigment. This can help to assure mixing and achieve good distribution of pigment throughout the slurry. A common concrete slurry can contain, for example, 75% aggregate and 25% Portland cement. Depending on conditions, water is added to the dry mix of aggregate and cement to achieve a slurry typically containing about 15% water by weight. In this case, if the target pigment content of the cured masonry product is 5% by weight, then the slurry can be prepared by adding approximately 20% by weight of a 25% aqueous dispersion of carbon black to the dry concrete mix. Alternatively, more highly concentrated dispersions, for example, up to 45% modified carbon black by weight, can be used.

The dispersions can include chemically modified carbon black at concentrations of at least 10%, at least15%, or preferably at least 20%, more preferably at least 25%, at least 30%, at least 35%, or greater than or equal to 40% by weight and can still achieve a useful viscosity (at 10 rpm unless otherwise stated) of less than 1100 cP, less than 1000 cP, less than 800 cP, less than 700 cP, less than 650 cP, less than 600 cP or less than 560 cP. In some embodiments, dispersions may be limited to a modified carbon black concentration of less than 60% or less than 50% by weight. Dispersion viscosities are measured using a Brookfield^{®} DV-II+ viscometer (Brookfield Engineering Laboratories, Middleboro, MA) employing the following procedure.

After the instrument is powered up, the chiller is turned on and the temperature set to 25 °C. The instrument is then zeroed using the auto zero process as instructed by the instrument display. A spindle is selected by pressing the "set spindle" function until the chosen spindle (#3 is used herein unless otherwise specified) is highlighted. The "set spindle" function is pressed again to enter the selection. A small sample cup is partly filled with the dispersion to be tested. If using a disk type geometry (such as #3), the disk is placed into the dispersion and rotated gently to release any air that might be trapped under the disk. Bullet-shaped geometries can be attached directly to the spindle. The sample cup is then placed in the jacketed holder on instrument, and, if not already attached, the geometry is screwed onto the spindle. Using a pipette, the sample cup is filled to about 2.5 mm from the top and the speed is set to 10 rpm. The motor is turned on and the system is allowed to equilibrate for a minute at 10 rpm. This is repeated at 20 rpm, 50 rpm and 100 rpm. After equilibrating for one minute at 100 rpm, the test is complete and the motor is turned off.

Millbases including higher carbon black pigment loadings, if stable, can reduce costs of, for instance, shipping and storage. At these higher concentrations, millbases typically become too viscous to work and may be too viscous to pass through a bead mill. For instance, to pass through an Eiger mill, millbases including medium structure carbon blacks are typically limited to a carbon black concentration of about 20 or 25% unless large amounts of dispersant are used. The chemically treated carbon blacks described herein provide for lower viscosities at higher loadings. Because such carbon blacks can be stirred, rather than milled, into a millbase, higher viscosities can be tolerated in the production process. In addition to eliminating or reducing the amount of milling required, the mixing power (speed) can be significantly reduced. For example, some embodiments of the treated carbon blacks described herein can be adequately dispersed by mixing at a mixing blade tip velocity of less than 10 m/s, less than 5 m/s, less than 4 m/s, less than 3 m/s or less than or equal to 2 m/s. In comparison, currently used modified and unmodified carbon black pigments are typically prepared by milling and mixing at a tip speed of greater than 10 m/s in the presence of an increased concentration of dispersant.

Several measurable optical factors can be used to evaluate masonry materials comprising pigments such as carbon blacks. The color can be represented three dimensionally by measuring jetness (L*), blue/yellow (b*) and red/green (a*). An L* value of 0 would be perfectly black while higher numbers are whiter. At various loadings in masonry materials such as concrete, the treated carbon blacks described herein can be cured to produce a masonry composition having an L* value of less than or equal to 33, less than or equal to 30, less than or equal to 25, less than or equal to 20 or less than or equal to 18. In different embodiments, the amount of chemically treated carbon black in a masonry composition by weight (dry basis) can be, for example, at least 0.5%, at least 1%, at least 2%, at least 3%, at least 4%, at least 5%, at least 10% or at least 15%. In these and other embodiments, the amount of chemically treated carbon black by weight can be at most 20%, at most 15%, at most 10%, at most 8%, at most 6%, at most 5%, at most 4%, at most 3% or at most 2%. For example, a concrete block containing 1% of carbon black having attached sulfonate, carboxylate, or phosphonate groups can exhibit an L* value of at most 33 or at most 30 or at most 25. The same concrete compositions containing 6% of the same carbon blacks can exhibit an L* value of at most 30, at most 25, or at most 20.

Carbon blacks are known to those skilled in the art and include channel blacks, furnace blacks, gas blacks, and lamp blacks. Carbon blacks from a variety of suppliers can be used. Some commercially available carbon blacks are sold under the Regal^{®}, Black Pearls^{®}, Elftex^{®}, Monarch^{®}, Mogul^{®}, Spheron^{®}, Sterling^{®}, and Vulcan^{®} trademarks and are available from Cabot Corporation (such as Black Pearls^{®} 1100, Black Pearls^{®} 1000, Black Pearls^{®} 900, Black Pearls^{®} 880, Black Pearls^{®} 800, Black Pearls^{®} 700, Black Pearls^{®} 570, Black Pearls^{®} L, Elftex^{®} 8, Elftex^{®} 320, Monarch^{®} 1100, Monarch^{®} 1000, Monarch^{®} 900, Monarch^{®} 880, Monarch^{®} 800, Monarch^{®} 700, Mogul^{®} L, Regal^{®} 330, Regal^{®} 400, and Regal^{®} 660 carbon blacks. Other commercially available carbon blacks include but are not limited to carbon blacks sold under the Raven^{®}, Statex^{®}, Furnex^{®}, and Neotex^{®} trademarks, the CD and HV lines available from Columbian Chemicals, and the Corax^{®}, Durax^{®}, Ecorax^{®} and Purex^{®} products available from Orion Engineered Carbons. Furnace blacks are preferred for use with the embodiments provided herein.

The carbon blacks described herein can exhibit a specific range of statistical thickness surface area (STSA or t-area, measured according to ASTM D6556). As used herein, the STSA of a modified carbon black is the STSA of the carbon black prior to the modification. In some embodiments, the carbon blacks that are modified have an STSA between about 25 m²/g and about 300 m²/g, between about 25 m²/g and about 250 m²/g, or between about 50 m²/g and about 200 m²/g. If the surface area of the carbon black is too high, then the carbon black will be difficult to disperse, even with the levels of surface treatment specified herein. In addition, the viscosity of the dispersion will be higher at a given solids loading. That is, higher surface area carbon blacks result in higher viscosity dispersions, which may make them more difficult to disperse in a concrete slurry.

The modified carbon black can have a wide variety of primary particle sizes known in the art. For example, the carbon black may have a primary particle size of between about 5 nm to about 100 nm, including about 10 nm to about 80 nm and 15 nm to about 50 nm. In some embodiments, the carbon black may have a primary particle size of less than 200, less than 100 or less than 75 nm. In addition, the carbon black can also have a wide range of values of OAN (oil adsorption number, measured according to ASTM D2414), which is a measure of the structure or branching of the pigment. For example, before surface modification, the carbon black may have an OAN value of from about 25 to 250 mL/100g, for example, from about 30 to 150 mL/100g or from about 50 to 100 mL/100g. In aqueous dispersions such as millbases and liquid dispersions, the modified carbon black particle dispersions can exhibit D90 less than 0.6 µm, for example, from 0.1 to 0.6 µm, 0.1 to 0.4 µm or from 0.15 to 0.5 µm.

The carbon black prior to treatment may also be a carbon black that has been oxidized using an oxidizing agent in order to introduce ionic and/or ionizable groups onto the surface. Carbon blacks prepared in this way have been found to have a higher degree of oxygen-containing groups on the surface. Oxidizing agents include, but are not limited to, oxygen gas, ozone, NO₂ (including mixtures of NO₂ and air), peroxides such as hydrogen peroxide, persulfates, including sodium, potassium, or ammonium persulfate, hypohalites such a sodium hypochlorite, halites, halates, or perhalates (such as sodium chlorite, sodium chlorate, or sodium perchlorate), oxidizing acids such a nitric acid, and transition metal containing oxidants, such as permanganate salts, osmium tetroxide, chromium oxides, or ceric ammonium nitrate. Mixtures of oxidants may also be used, particularly mixtures of gaseous oxidants such as oxygen and ozone. In addition, carbon blacks prepared using other surface modification methods to introduce ionic or ionizable groups onto a pigment surface, such as chlorination and sulfonylation, may also be used.

The modified carbon black may be prepared using any method known to those skilled in the art such that organic chemical groups are attached to the pigment. For example, the modified pigments can be prepared using the methods described in U.S. Patent Nos. 5,554,739; 5,707,432; 5,837,045; 5,851,280; 5,885,335; 5,895,522; 5,900,029; 5,922,118; 6,042,643 and 6,337,358. Such methods provide for a more stable attachment of the groups onto the carbon black compared to dispersant type methods, which use, for example, polymers and/or surfactants. Other methods for preparing the modified carbon blacks include reacting a carbon black having available functional groups with a reagent comprising the organic group, such as described in, for example, U.S. Patent No. 6,723,783. Such functional pigments may be prepared using the methods described in the references above. In addition, modified carbon blacks containing attached functional groups may also be prepared by the methods described in U.S. Patent Nos. 6,831,194 and 6,660,075, U.S. Patent Publication Nos. 2003-0101901 and 2001-0036994, Canadian Patent No. 2,351,162, European Patent No. 1 394 221, and PCT Publication No. WO 04/63289, as well as in N. Tsubokawa, Polym. Sci., 17:417, 1992.

The organic group of the modified carbon black may be a group that enables the modified carbon black to be dispersible in the aqueous vehicle of a selected liquid dispersion or millbase. The organic group includes an ionic or ionizable group, the ionic or ionizable group being present at a treatment level from 1.0 to 3.0 µmol/m² based on the STSA of the untreated black. As used herein, an organic group that is used to treat a carbon black prior to forming an aqueous dispersion, by diazonium chemistry for example, is not considered to be a dispersant in the aqueous liquid dispersion made from the modified carbon black.

The attachment (treatment) level of the organic group on the modified carbon black should be adequate to provide for a stable dispersion of the modified carbon black in the aqueous vehicle. Attachment levels are provided in terms of moles of the ionic or ionizable group per surface area (STSA) of untreated carbon black. For example, ionic or ionizable groups may be attached at a level of 1.0 to 3.0 µmol/m², 1.3 to 2.7 µmol/m², or 1.5 to 3.0 µmol/m². In some embodiments in which the organic group only includes one ionic or ionizable group, the attachment level of the organic group and the ionizable or ionic group will be the same. Where the organic group comprises more than one ionic or ionizable group, the attachment level of the organic group and the ionic or ionizable group will be different. In such cases, the levels of attachment for groups including ionic or ionizable groups may also be quantified in terms of equivalents per area. These levels of attachment can be determined by methods known to those of skill in the art, such as elemental analysis.

Groups can be attached to carbon blacks using methods such as diazonium chemistry, azo chemistry, peroxide chemistry, sulfonation and cycloaddition chemistry. Diazonium processes disclosed in one or more of these references can be adapted to provide a reaction of at least one diazonium salt with a carbon black pigment such as a raw or oxidized organic black pigment that has not yet been surface modified with attachment groups. A diazonium salt is an organic compound having one or more diazonium groups. In some processes, the diazonium salt may be prepared prior to reaction with the organic black pigment material or, more preferably, generated in situ using techniques such as described in the cited references. In situ generation also allows the use of unstable diazonium salts such as alkyl diazonium salts and avoids unnecessary handling or manipulation of the diazonium salt. In some processes, both nitric acid and the diazonium salt can be generated in situ.

A diazonium salt, as is known in the art, may be generated by reacting a primary amine, a nitrite and an acid. The nitrite may be any metal nitrite, preferably lithium nitrite, sodium nitrite, potassium nitrite, or zinc nitrite, or any organic nitrite such as for example isoamylnitrite or ethylnitrite. The acid may be any acid, inorganic or organic, which is effective in the generation of the diazonium salt. Preferred acids include nitric acid, HNO₃, hydrochloric acid, HCl, and sulfuric acid, H₂SO₄. The diazonium salt may also be generated by reacting the primary amine with an aqueous solution of nitrogen dioxide. The aqueous solution of nitrogen dioxide, NO₂/H₂O, can provide the nitric acid needed to generate the diazonium salt. In general, when generating a diazonium salt from a primary amine, a nitrite, and an acid, two equivalents of acid are required based on the amine. In an in situ process, the diazonium salt can be generated using one equivalent of the acid. When the primary amine contains a strong acid group, adding a separate acid may not be necessary in some processes. The acid group or groups of the primary amine can supply one or both of the needed equivalents of acid. When the primary amine contains a strong acid group, preferably zero to one equivalent of additional acid can be added to a process to generate the diazonium salt in situ. One example of such a primary amine that has shown exceptional properties is para-aminobenzenesulfonic acid (sulfanilic acid). Additional primary amines that can provide benefits to carbon blacks used in masonry compositions are para-aminobenzoic acid (PABA) and aniline-based compounds having one or more phosphonic acid groups attached via the para- position, for example, either directly to the phenyl ring or via a substituted or unsubstituted alkyl (e.g., C1-C3) spacer.

The surface-modified carbon blacks comprise a carbon black pigment having attached at least one organic group comprising an ionic or ionizable group. The modified carbon black can have attached at least one organic group having the formula -X-Z, wherein X, which is a first chemical group directly attached to the carbon black, represents an arylene group, a heteroarylene group, an aralkylene group, or an alkarylene group, and Z represents at least one ionic group or at least one ionizable group. Z may be non-polymeric.

As indicated, the group X can represent an arylene or heteroarylene group, an alkylene group, aralkylene group, or an alkarylene group. X can be directly attached to the pigment and is further substituted with the Z group. X can be a linker group (e.g., a linking diradical) that preferably can be directly bonded between the pigment surface and the Z group. The arylene and heteroarylene groups can be an aromatic group including, but not limited to, unsaturated cyclic hydrocarbons containing one or more rings. For the heteroarylene groups, one or more ring carbons of the aromatic group are substituted by a hetero atom. The heteroatoms are non-carbon atoms such as N, S, O, or others. The hydrogens of the aromatic group can be substituted or unsubstituted. As indicated, X can represent a heteroarylene group. It has been found that using a diazonium chemistry route including heterocycle-based diazonium salts to treat organic black pigment surfaces, such as perylene black surfaces, can make it easier to attach the surface modification groups. Where X is aralkylene or alkarylene, the aromatic group may be an arylene or a heteroarylene group.

The heteroarylene group can be a linker group which comprises, for example, at least one heterocyclic ring which contains one or more heteroatoms (e.g., one, two, three, or more heteroatoms). The heterocyclic ring can contain, for example, from 3 to 12 ring member atoms, or from 5 to 9 ring members, or 5, or 6, or 7, or 8 membered rings. The heterocyclic ring can include, for example, at least one carbon atom, or at least two carbon atoms, or other numbers of carbon atoms. When multiple heteroatoms are used in a heterocyclic ring, the heteroatoms can be the same or different. The heterocyclic group may contain a single heterocyclic ring or fused rings including at least one heterocyclic ring. The heteroarylene group can be, for example, imidazolylene, pyrazolylene, thiazolylene, isothiazolylene, oxazolylene, isoxazolylene, thienylene, furylene, fluorenylene, pyranylene, pyrrolylene, pyridylene, pyrimidylene, indolylene, isoindolylene, tetrazolylene, quinolinylene, isoquinolinylene, quinazolinylene, carbazolylene, purinylene, xanthenylene, dibenzofurylene, 2H-chromenylene, or any combinations thereof. X can also represent an arylene group, such as a phenylene, naphthylene, biphenylene phenyl, anthracenylene, and the like. When X represents an alkylene group, examples include, but are not limited to, substituted or unsubstituted alkylene groups that may be branched or unbranched. For example, the alkylene group can be, for example, a C₁-C₁₂ group such as methylene, ethylene, propylene, or butylene, or other alkylenes. When X represents aralkylene or alkarylene, the arylene and alkylene components may be any of those discussed above.

The group X can be further substituted with groups other than Z, such as one or more alkyl groups or aryl groups. Also, the group X can be substituted, for example, with one or more functional groups. Examples of functional groups include, but are not limited to, R, OR, COR, COOR, OCOR, carboxylates, halogens, CN, NR₂, SO₃H, sulfonates, sulfates, NR(COR), CONR₂, NO₂, PO₃H₂, phosphonates, phosphates, N-NR, SOR, NSO₂R, wherein R, which can be the same or different, is independently hydrogen, branched or unbranched C₁-C₂₀ substituted or unsubstituted, saturated or unsaturated hydrocarbons, e.g., alkyl, alkenyl, alkynyl, substituted or unsubstituted aryl, substituted or unsubstituted heteroaryl, substituted or unsubstituted alkaryl, or substituted or unsubstituted aralkyl.

As indicated, group Z is at least one ionic group or ionizable group. The group Z can also comprise a mixture of an ionic group and an ionizable group. The ionic group can be either anionic or cationic and can be associated with a counterion of the opposite charge including counterions such as Na⁺, K⁺, Li⁺, NH⁴⁺, NR'⁴⁺, acetate, NO₃-, SO₄⁻², R'SO₃-, R'OSO₃-, OH-, and CI-, where R' represents hydrogen or an organic group such as a substituted or unsubstituted aryl and/or alkyl group. The ionizable group can be one that is capable of forming an ionic group in the medium of use. Anionizable groups can form anions and cationizable groups can form cations. Ionic groups include those described in U.S. Pat. Nos. 5,698,016; 5,837,045; and 5,922,118. The anionic groups are negatively charged ionic groups that may be generated from groups having ionizable substituents that can form anions (anionizable groups), such as acidic substituents. They may also be the anion in the salts of ionizable substituents. Representative examples of anionic groups include -COO-, -SO₃-, -OSO₃-, -HPO₃-, -OPO₃⁻², and -PO₃⁻². The anionic group can comprise a counterion that is a monovalent metal salt such as a Na⁺ salt, a K⁺ salt or a Li⁺ salt. The counterion may also be an ammonium salt, such as a NH⁴⁺ salt. Representative examples of anionizable groups include -COOH, -SO₃H, -PO₃H₂, -R'SH, -R'OH, and -SO₂NHCOR', where R' represents hydrogen or an organic group such as a substituted or unsubstituted aryl and/or alkyl group. The cationic groups are positively charged ionic groups that may be generated from ionizable substituents that can form cations (cationizable groups), such as protonated amines. For example, alkyl or aryl amines may be protonated in acidic media to form ammonium groups -NR'₂H⁺, where R' represent an organic group such as a substituted or unsubstituted aryl and/or alkyl group. Cationic groups may also be positively charged organic ionic groups. Examples include quaternary ammonium groups (-NR'³⁺) and quaternary phosphonium groups (-PR'³⁺). Here, R' represents hydrogen or an organic group such as a substituted or unsubstituted aryl and/or alkyl group. The cationic group can comprise an alkyl amine group or a salt thereof or an alkyl ammonium group. Quaternary ammonium groups (--NR₃ ⁺ and quaternary phosphonium groups (--PR₃ ⁺) represent examples of cationic groups and can be attached to the same organic groups as discussed above for the ionizable groups which form anions. Preferably, the organic group contains an aromatic group such as a phenyl or a naphthyl group and a quaternary ammonium or a quaternary phosphonium group. The aromatic group is preferably directly attached to the carbon black. Quaternized cyclic amines, and quaternized aromatic amines, can also be used as the organic group. Thus, N-substituted pyridinium compounds, such as N-methyl-pyridyl, can be used in this regard.

The group Z can comprise at least one carboxylic acid group or salt thereof, at least one sulfonic acid group or salt thereof, at least one sulfate group, at least one phosphonic acid group or partial ester or salt thereof, a least one alkyl amine group or salt thereof, or at least one alkyl ammonium group. Since it can be preferred that the group X be a heteroarylene group or an arylene group, attached organic groups having the formula - X-Z can include, but are not limited to, heteroaryl carboxylic acid groups, heteroaryl sulfonic acid groups, heteroaryl phosphonic or bisphosphonic acid groups, aralkyl phosphonic or bisphosphonic acid groups, aryl carboxylic acid groups, aryl sulfonic acid groups, or salts (or, for phosphonic and bisphosphonic groups, partial esters) thereof. For example, the attached organic group can be, for example, an imidazolyl carboxylic acid group, an imidazolyl sulfonic acid group, a pyridinyl carboxylic acid group, a pyridinyl sulfonic acid group, a benzene carboxylic acid group, a benzene dicarboxylic acid group, a benzene tricarboxylic acid group, a benzene sulfonic acid group, or salts thereof. Alternatively or in addition, Z may have the structure -Sp-(PO₃H₂)_{q}, where q is 1 or 2 and Sp is either a bond or a C1-C3 alkyl or alkenyl group, or partial esters or salts thereof. The attached organic group may be any of the phosphonic acid containing groups disclosed in US8858695. The attached organic group may also be a substituted derivative of any of these. Where the group Z is anionic, the treated carbon black may have an advantage for use in cold weather applications. Untreated carbon blacks can scavenge the dispersants used for air entrainment in concrete. Such dispersants are typically anionic or nonionic surfactants, including wood based resins such as vinsol resin, fatty acids, petroleum acid salts, and alkyl and alkylaryl sulfonates. These dispersants regulate the formation of small air bubbles within the concrete that provide volume for thermal expansion of water during freeze thaw cycles. Carbon blacks surface treated with anionic groups will repel the anionic groups on the air entrainment agents, reducing the scavenging effect of the carbon black.

As used herein, dispersants are substances that can be used in aqueous systems to aid in forming a dispersion of otherwise non-dispersible carbon black particulates. Dispersants associate strongly with particles and are selected for their ability to keep particles separated. Dispersants can include surfactants, functionalized polymers and oligomers. Dispersants may be non-ionic dispersants or may be ionic dispersants, e.g., anionic or cationic dispersants. Non-ionic dispersants are preferred and among ionic dispersants, anionic dispersants are preferred. Dispersants may be amphiphilic and may be polymeric or include a polymeric group. Dispersants do not include other additives that may be used in aqueous dispersions such as wetting agents, defoamers and co-solvents.

Specific examples of polymeric dispersants include synthetic polymeric dispersants. Ethoxylates are commonly used in waterborne formulations as dispersants. For instance, alkylphenol ethoxylates and alkyl ethoxylates may be used. Examples include PETROLITE^{®} D-1038 from Baker Petrolite. Polymers and related materials that can be used for dispersants and additives in aqueous dispersions are included in the Tego products from Evonik, the Ethacryl products from Lyondell, the Joncryl polymers and EFKA dispersants from BASF, and the Disperbyk^{®} and Byk^{®} dispersants from BYK. Exemplary dispersants that may be employed include but are not limited to DisperBYK182, DisperBYK 190 and or DisperBYK 192, all available from BYK Chemie, Solsperse^{™} dispersants available from Lubrizol, including 46000; and EFKA4585, EFKA4550, and EFKA4560 from Ciba.

Various rheology modifiers can also be used in conjunction with the aqueous dispersion composition to adjust the viscosity of the composition as well as to provide other desirable properties. Suitable compounds include, but are not limited to, water soluble polymers and copolymers such as gum arabic, polyacrylate salts, polymethacrylate salts, polyvinyl alcohols (e.g., Elvanols from DuPont, Celvoline from Celanese), hydroxypropylcellulose, hydroxyethylcellulose, polyvinylpyrrolidinone (such as Luvatec from BASF, Kollidon and Plasdone from ISP, and PVP-K), polyvinylether, starch, polysaccharides, polyethyleneimines with or without being derivatized with ethylene oxide and propylene oxide and the like. Alternatively or in addition, a defoamer may be used if necessary.

Various additives for controlling or regulating the pH of the aqueous dispersions described herein may also be used. Examples of suitable pH regulators include various amines such as diethanolamine and triethanolamine as well as various hydroxide reagents. An hydroxide reagent is any reagent that comprises an OH- ion, such as a salt having an hydroxide counterion. Examples include sodium hydroxide, potassium hydroxide, lithium hydroxide, ammonium hydroxide, and tetramethyl ammonium hydroxide. Other hydroxide salts, as well as mixtures of hydroxide reagents, can also be used. Furthermore, other alkaline reagents may also be used which generate OH- ions in an aqueous medium. Examples include carbonates such as sodium carbonate, bicarbonates such as sodium bicarbonate, and alkoxides such as sodium methoxide and sodium ethoxide. Buffers may also be added.

In one set of embodiments it has been found that readily dispersible modified carbon blacks can be made by surface treating the untreated carbon black with sulfanilic acid using diazonium chemistry resulting in a modified carbon black including the benzene sulfonic acid group (p-C₆H₄SO₃⁻ ). Alternatively or in addition, para-aminobenzoic acid may be used to treat carbon blacks using diazonium chemistry to obtain a modified carbon black including p-C₆H₄CO₂⁻ groups. In a third set of embodiments, one of [2-(4-(aminophenyl)-1-hydroxyethane-1,1-diyl] bisphosphonic acid monosodium salt, [2-(4-(aminophenyl)-1-hydroxypropane-1,1-diyl] bisphosphonic acid monosodium salt, [2-(4-(aminophenyl)-1-hydroxybutane-1,1-diyl] bisphosphonic acid monosodium salt, [4-(aminophenyl)(hydroxyl)methylene]bisphosphonic acid monosodium salt. [amino-(4-(aminophenyl)methylene] bisphosphonic acid, monosodium salt. [2-(4-(Aminophenyl)ethane-1,1-diyl] bisphosphonic acid monosodium salt, or 4-aminobenzyl phosphonic acid may be used to treat carbon blacks using diazonium chemistry to obtain a modified carbon black including an organic group having one or more phosphonic acid salt groups.

These groups may be helpful in rendering the modified carbon black dispersible and, as shown below, many of these treated carbon blacks can be stirred into dispersions or incorporated into masonry compositions without the use of high energy or grinding media. Although higher amounts of treating agent are used to improve the dispersibility of a carbon black, it has been found that a reduced level of treatment results in a pigment that provides for better dispersion throughout the masonry composition. For instance, very specific modified carbon blacks having an STSA of less than 200 m²/g prior to treatment and a treatment level of at most 3.0, at most 2.7, at most 2.5 or from 1.5-2.7 µmol/m² of sulfonic acid groups have been shown to provide excellent dispersion in concrete. It has also been found that, contrary to what is believed in the art, additional dispersant may have a negative effect on the dispersibility of some treated carbon blacks. Relative to the amount of carbon black in a liquid dispersion, the dispersant concentration may be less than about 5, for example, about 4 or less, about 3 or less, about 2 or less, or about 1 or less gram dispersant per 100 g carbon black. In many embodiments, no dispersant is required. Specific dispersant ranges may be dependent on, for example, the treatment level of the modified carbon black that is being dispersed or the method by which the modified carbon black is incorporated into the concrete.

### Example 1

### Pigmented Concrete Formulation

Concrete samples were pigmented with iron oxide and various carbon blacks. The dry concrete mix (1500 g) was combined with the pigment in a 1.9 l (half gallon) container. The container was rolled for 5 minutes until the pigment was evenly dispersed in the concrete mix. Water (265-269 mL) was then added and the container was rolled for another 5 minutes to provide a uniform slurry. The slurry was poured into molds and allowed to cure for 48 hours. After curing, the resulting cured samples were removed from the mold and evaluated for consistency, color, jetness and weathering. The reflectance spectrum of the dry, colored concrete was determined. The reflectance values were used to compute the International Commission on Illumination CIE 1976 L* a* and b* values. L* represents the lightness coordinate running from 0 for a pure black to 100 for a pure white; a* represents the red-green coordinate with its value becoming larger as the degree of redness increases; b* represents the yellow-blue coordinate with its value becoming larger as the degree of yellowness increases.

In a first set of examples, samples of concrete made with Sakrete Portland cement (75% aggregate) were made using different pigments and pigment concentrations. Sample A contained 6% by weight of Elftex^{®} 320 carbon black, an untreated carbon black having an STSA of 62 m²/g. Sample B contained 6% by weight of Elftex 320 carbon black that had been treated with sulfanilic acid to produce a carbon black with a surface treatment level of 2 µmol/m². Sample C contained 6% by weight of Bayfferrox 360 black iron oxide. After curing, each sample was evaluated for jetness. The results are provided in Table 1 and show that the sample made with the chemically treated carbon black provided significantly improved jetness.

**Table 1**

| Sample | Jetness (L*) |
|---|---|
| A (Elftex 320 carbon black) | 26.14 |
| B (Elftex 320 carbon black w/sulfanilic acid treatment) | 17.44 |
| C (Iron oxide) | 35.73 |

### Pigment distribution -

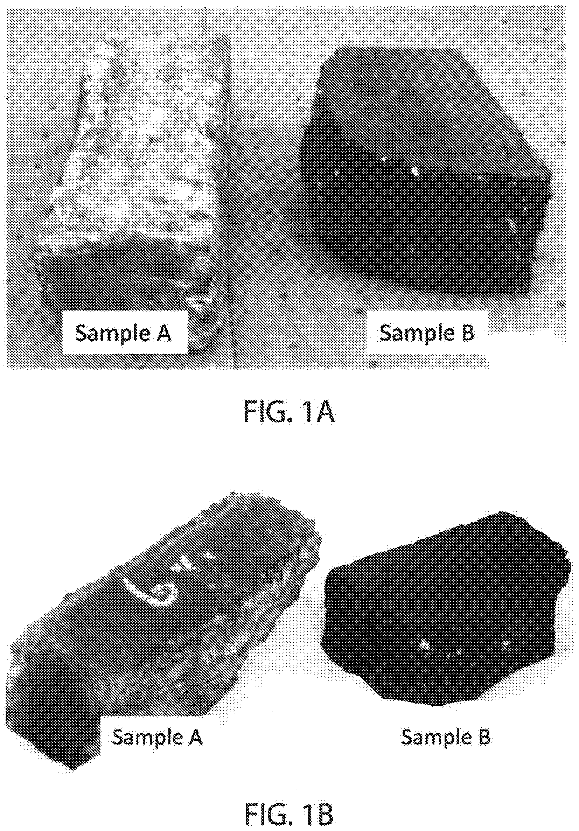

Samples A and B were split open to examine how evenly the carbon black was distributed throughout the block. As shown in the photographs of FIGS. 1A (cross section) and 1B (original surfaces), the pigment in Sample A (Elftex 320 carbon black) was poorly distributed and was concentrated on the surface. In contrast, the pigment in Sample B (chemically treated Elftex 320 carbon black) was well distributed throughout the block. This indicates that even after significant wear, the concrete blocks using the chemically treated pigment will maintain their color. These blocks can also be divided into smaller pieces that will show good color on all surfaces.

### Weathering -

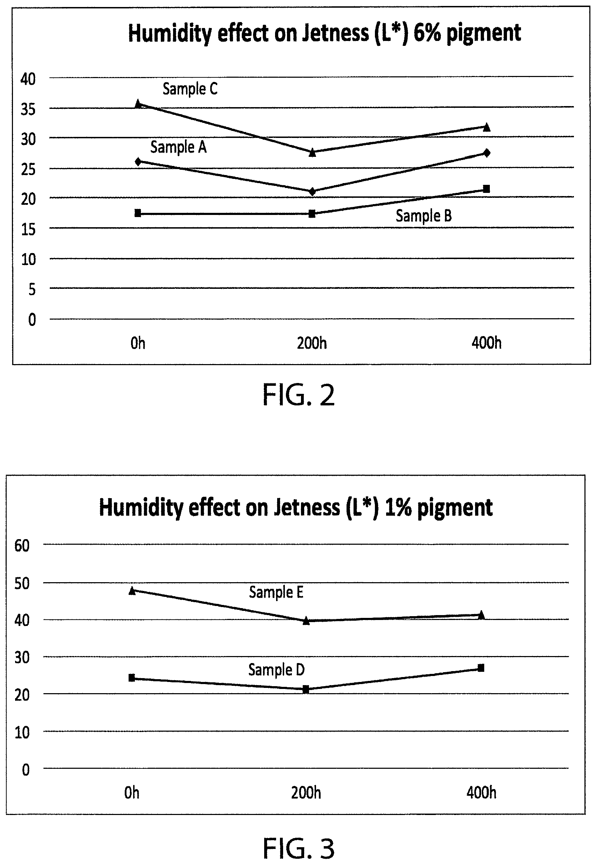

The effect of extended humidity on the three samples is illustrated in FIG. 2. Moisture on a pigmented concrete block can bring calcium hydroxide to the surface where it reacts with atmospheric carbon dioxide to make insoluble, white calcium carbonate. The calcium carbonate can quickly reduce the jetness of a black pigmented concrete block. As shown in FIG. 2, the chemically treated carbon black pigment (Sample B) provided the most consistent jetness over the course of 400 h exposure to 100% humidity at 100 °C.

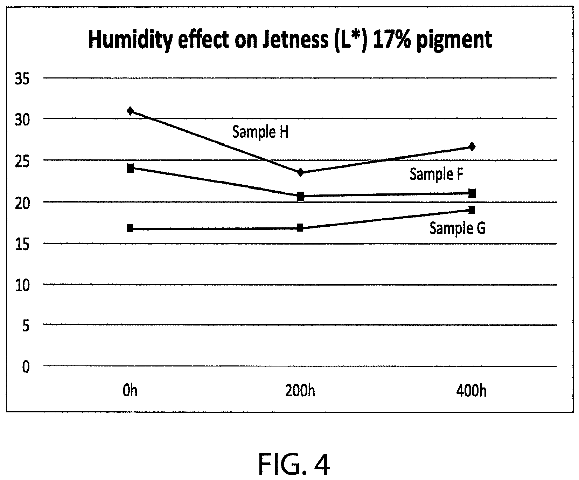

Additional concrete samples were made using (by weight): 1% chemically treated Elftex 320 carbon black (Sample D), 1% iron oxide (Sample E), 17% Elftex 320 carbon black (Sample F), 17% chemically treated Elftex 320 carbon black (Sample G) and 17% iron oxide (Sample H). Graphs showing the change in jetness after incubation in a humidity chamber are provided in FIGS. 3 and 4. As with the 6% loading samples, the most consistent jetness with 1% and 17% loadings is maintained with the sulfanilic acid treated Elftex 320 carbon black.

### Example 2

Concrete samples are pigmented with carbon black in dispersion form. Water (116 g) is combined with dispersant (23 g Baker Petrolite D1038 non-ionic dispersant, 10% solids) and defoamer (1 g BYK 024 defoamer), following which carbon black (60 g Black Pearls 800 carbon black that has been chemically treated with sulfanilic acid using conventional diazonium chemistry to result in a treatment level of 2.6 µmol/m²) is added and agitated until fully mixed. Sufficient carbon black dispersion and enough water to total 265-269 mL water is added to dry concrete mix (1500 g Sakrete cement) in a 1.9 l (half gallon) container to provide from 1wt% to 3wt% pigment in the concrete and rolled until the pigment is evenly distributed (at least 5 min). The slurry is poured into molds and allowed to cure for 48 hours.

### Example 3

### Pigmented Concrete Formulation

Concrete samples (Superior Ready Mix, San Diego, CA) were pigmented with iron oxide (Davis Colors 860 pigment) and the carbon blacks set forth in Example 1 at loadings of 1%, 3.5%, and 6% pigment with respect to cement). The water to cement ratio was constant for all trial batch mixes. A control concrete with no pigment was also prepared.

The compressive strength of cylindrical specimens was measured in duplicate according to ASTM C39. At 1% loading, the compressive strength of the samples prepared with iron oxide and surface modified carbon black are similar, as shown in Table 2.

**Table 2**

| | Plastic Test Results | | | | Average Compressive Strength (psi)* over time (number of davs) | | | |
|---|---|---|---|---|---|---|---|---|
| | wt % pigment | Slump (in) | mix temp (deg F)/ °C | Air content (%) | 1 | 2 | 7 | 28 |
| Control Mix | 0 | 2.75 | 84 / 29 | 1.1 | 2000 | 2880 | 4625 | 6375 |
| Iron Oxide | 1 | 4.5 | 74 / 23 | 0.7 | 2155 | 2775 | 4690 | 6125 |
| Iron Oxide | 3.5 | 3 | 75 / 24 | 1 | 2070 | 3110 | 4965 | 6310 |
| Iron Oxide | 6 | 2.5 | 74 / 23 | 12 | 2085 | 3010 | 4330 | 6885 |
| Unmodified CB | 1 | 3 | 77 / 25 | 1 | 2070 | 2725 | 4625 | 6295 |
| Unmodified CB | 3.5 | 2 | 76 / 24 | 1.3 | 1920 | 2530 | 4180 | 5925 |
| Unmodified CB | 6 | 1 | 76 / 24 | 12 | 1805 | 2580 | 4270 | 5615 |
| Modified CB | 1 | 3 | 80 / 27 | 1 | 1930 | 2840 | 4710 | 6355 |
| Modified CB | 3.5 | 3 | 77 / 25 | 1 | 1740 | 2390 | 4280 | 5640 |
| Modified CB | 6 | 3.5 | 76 / 24 | 0.9 | 1605 | 2520 | 4010 | 5415 |

| | | | | | | | | |
|---|---|---|---|---|---|---|---|---|
| 1 psi = 6.89 kPa | | | | | | | | |

The time of set for the various cements was measured according to ASTM C403 and the results are shown in Table 3 below. The initial time of set and final time of set define a window of time during which concrete can be worked, for example, the time during which a concrete slab can be smoothed. The difference between the final and initial time of set was comparable or larger for the samples prepared with unmodified or surface modified carbon black than for the samples prepared with iron oxide.

**Table 3**

| | % pigment | initial time of set (min) | final time of set (min) | difference in time of set (min) |
|---|---|---|---|---|
| Control Mix | 0 | 240 | 317 | 77 |
| Iron Oxide | 1 | 253 | 340 | 87 |
| Iron Oxide | 3.5 | 254 | 335 | 81 |
| Iron Oxide | 6 | 237 | 324 | 87 |
| Unmodified CB | 1 | 264 | 351 | 87 |
| Unmodified CB | 3.5 | 263 | 359 | 96 |
| Unmodified CB | 6 | 260 | 367 | 107 |
| Modified CB | 1 | 254 | 346 | 92 |
| Modified CB | 3.5 | 288 | 367 | 79 |
| Modified CB | 6 | 299 | 398 | 99 |

### Example 4

### Efflorescence of Concrete samples

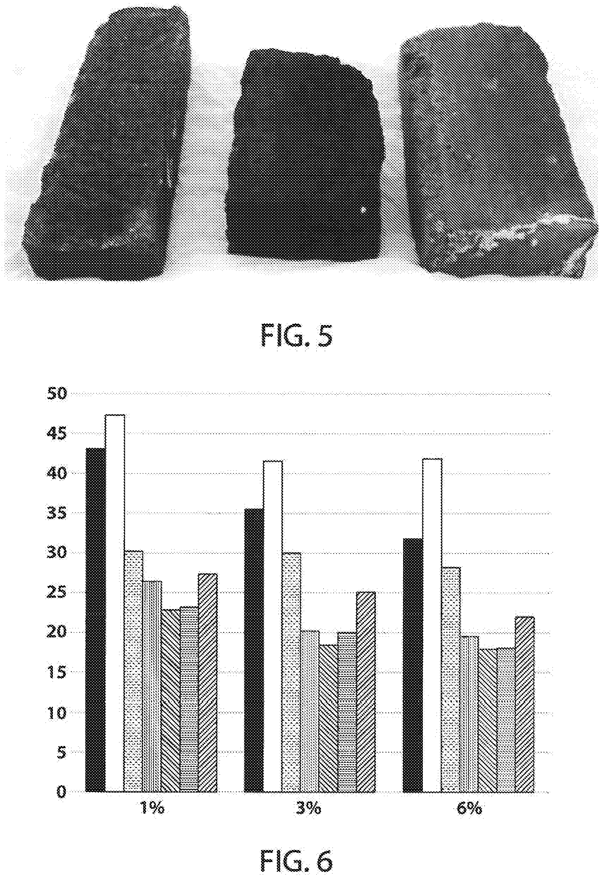

Concrete samples were prepared with the carbon blacks, iron oxide, concrete, and methods described in Example 1. The formulation used 1500 g Sakrete concrete mixture, 268.92 g water, and 23.93 g pigment (6 wt%). The color of the resulting concrete was noticeably darker for the surface modified pigment in comparison to the untreated pigment. Moreover, the concrete colored with surface modified pigment displayed little or no noticeable efflorescence. In contrast, the concrete colored with iron oxide displayed significant efflorescence along its edges, while the concrete colored with unmodified pigment displayed some efflorescence, but less than for the iron oxide. The color distribution was relatively uniform throughout the samples colored with unmodified or surface modified carbon black (Figure 5, left to right: untreated Elftex 320 carbon black, treated Elftex 320 carbon black, iron oxide).

### Example 6

### Variation of carbon black types

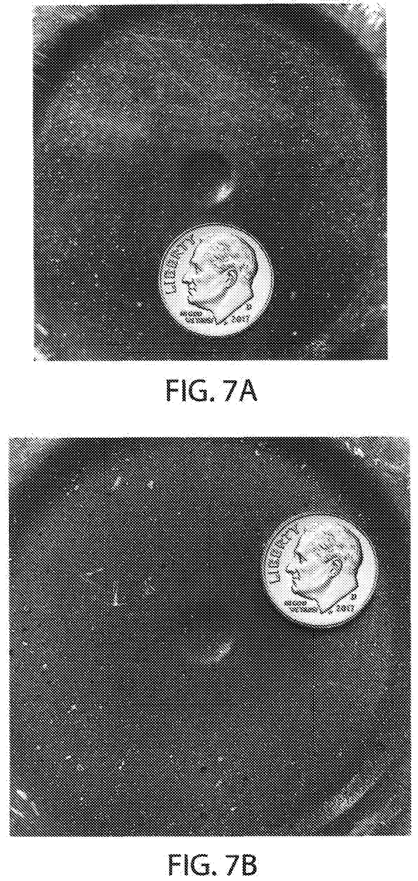

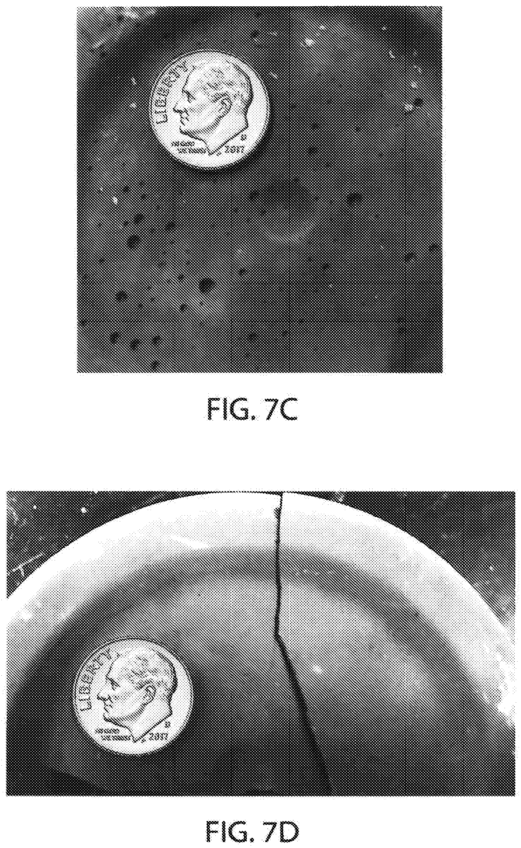

Concrete samples were prepared with dry pigment ("Dry") using the method described in Example 1, except with 500 g cement, 85 g water, and either 5, 15, or 30 g pigment to result in pigment concentrations of 1, 3, or 5% by weight. Concrete samples were prepared with dispersed pigment ("Wet") by combining 5, 10, or 15% pigment with 200 g water. Dispersions were rolled in 906 g (32 oz.) polypropylene tubbies for 5-10 minutes and then combined with 500 g Sakrete Portland cement (75% aggregate). The mixture was rolled for 5-10 min and then transferred to a clean tubby to set for at least 48 hours. The pigments are listed in Table 4 below. The iron oxide was iron (II, III) oxide, < 5 µm (microns), 95% pure from Sigma Aldrich. The carbon black in example 6D and 6E was prepared by treating Black Pearls 800 carbon black with sulfanilic acid using conventional diazonium chemistry to achieve a treatment level of 2.6 µmol/m². In addition, concrete samples were prepared with CAB-O-JET 300 and CAB-O-JET 400 dispersions from Cabot Corporation. These dispersions contain about 15 wt% carbon black having an STSA between 20 and 200 m²/g as measured prior to treatement. In CAB-O-JET 300 dispersion, the carbon black is modified with an organic group having a carboxyl group to give a carboxyl group content greater than 3 µeq/m². In CAB-O-JET 400 dispersion, the carbon black is modified as described in US8858695 with an organic group having one or more phosphonate groups to give a phosphonate content greater than 3 µeq/m². The dispersion was mixed with sufficient DI water to give a total mass of 200 g water, and the resulting dilute dispersion was combined with concrete as described for the "wet" samples above. The color of the samples was measured as described above and is shown in Figure 6 with respect to pigment loading in the concrete by weight. The results show that use of surface treated carbon black having attached organic groups comprising ionic groups produces deeper color (lower L*) than untreated carbon black. In addition, pre-dispersing the carbon black in water prior to adding it to the concrete also produces deeper color than adding dry powder. However, dispersion quality decreased with the use of the more highly treated carbon blacks in the CAB-O-JET dispersions in comparison to the "stir-in" blacks in Examples 6C-6E and decreased further as loading was increased. In addition, despite repeated tapping of the wet concrete to remove air, the set concrete samples produced with CAB-O-JET dispersions had numerous air bubbles on their surfaces (Figure 7 - all samples with 1% pigment; FIG. 7A - Example 6D, FIG. 7B - Example 6E, FIG. 7C - Example 6G, FIG. 7D - Example 6C). There were some air bubbles when the wet dispersion was used to produce concrete rather than dry carbon black. The photographs were taken on the "bottom" surface of the concrete samples which rested against the surface of the tubby.

**Table 4**

| Sample | Description | Dry or Wet | Shading in Figure 6 |
|---|---|---|---|
| 6A | Iron oxide | Dry | 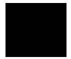 |
| 6B | Elftex 320 carbon black | Dry | 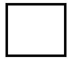 |
| 6C | Elftex 320 carbon black surface treated with 2.2 µmol/m² sulfanilic acid | Dry | 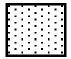 |
| 6D | Black Pearls 800 carbon black surface treated with 2.6 µmol/m² sulfanilic acid | Dry | 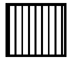 |
| 6E | Black Pearls 800 carbon black surface treated with 2.6 µmol/m² sulfanilic acid | Wet | 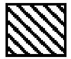 |
| 6F | CAB-O-JET 300 dispersion | Wet | 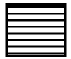 |
| 6G | CAB-O-JET 400 dispersion | Wet | 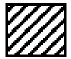 |

In addition, the samples were fractured to visually examine the dispersion of pigment in the samples. While the color of the samples was relatively uniform throughout the bulk of the concrete, macroscopic undispersed aggregates of carbon black could be observed in the concrete prepared with untreated carbon black. Indeed, some of the untreated carbon black partitioned out of the concrete during curing and deposited on the sides and bottom of the plastic tubbies in which the concrete was cured, further reducing color intensity in the concrete. The undispersed aggregates are less able to provide color to the concrete, thereby increasing L* values (indicating less jetness) in comparison to concrete samples prepared with treated blacks.

### Example 7

### Use of oxidized carbon black

Dry cement (95, 97, or 99 g) (Sakrete Portland Cement) and pigment (5, 3, and 1 g, respectively, to achieve a total solids mass of 100 g) were rolled until homogenous and then combined with 10 mL water, following which the cement was again rolled for 5-10 minutes until a uniform slurry was achieved. Mogul E carbon black (Cabot Corporation) is an oxidized carbon black having an iodine number of about 57 mg/g. The cement was allowed to cure for 48 hours and the color measured as described above. The pigments and the resulting color are described in Table 5 below. The results show that merely oxidizing the carbon black does not provide the dramatic improvement in color enabled by an attached organic group comprising an anionic or anionizable group.

**Table 5**

| Pigment | Loading (%) | L* |
|---|---|---|
| Elftex 320 carbon black | 5 | 28 |
| | 3 | 30 |
| | 3 | 33 |
| Mogul E carbon black | 5 | 26 |
| | 3 | 29 |
| | 1 | 31 |

All definitions, as defined and used herein, should be understood to control over dictionary definitions, definitions in documents cited herein, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified, unless clearly indicated to the contrary.

## Claims

1. A masonry composition comprising:
a mineral binder; and
a chemically treated carbon black product evenly dispersed throughout the composition, the chemically treated carbon black comprising a carbon black having attached an organic group including an ionic or an ionizable group, the ionic or ionizable group being present at a level from 1.0 to 3.0 µmol/m², wherein the carbon black has an STSA between 20 and 300 m²/g as measured prior to treatment.

2. The masonry composition of claim 1 wherein the chemically treated carbon black is present at a level from 1 to 20% by weight.

3. The masonry composition of claim 1 or 2 wherein the composition exhibits a jetness (L*) of at most 33.

4. The masonry composition of any of claims 1-3 wherein the jetness of the composition remains below 33 after 400 hours at 100% humidity.

5. The masonry composition of any of claims 1-4 wherein the chemically treated carbon black has an average primary particle size of from 15-50 nm.

6. A method of making a pigmented masonry composition comprising:
a) mixing a dry mixture of cement and aggregate with a powdered or pelletized chemically treated carbon black to produce a pigmented mixture, and mixing the pigmented mixture with water to produce a pigmented slurry; or
b) mixing an uncured masonry slurry with a chemically treated carbon black to form a pigmented slurry; or
c) combining a mixture of cement and aggregate with an aqueous dispersion of chemically treated carbon black to produce a pigmented slurry,
wherein, the chemically treated carbon black includes an organic group comprising an ionic or ionizable group, the ionic or ionizable group being present at a level from 1.0 to 3.0 µmol/m², wherein the carbon black has an STSA between 20 and 300 m²/g as measured prior to treatment.

7. The method of claim 6, wherein the chemically treated carbon black that is mixed with the uncured masonry slurry is in the form of a powder or pellets.

8. The method of claim 6, wherein the chemically treated carbon black that is mixed with the uncured masonry slurry is in the form of an aqueous dispersion.

9. The method of claim 6 or 8, wherein the aqueous dispersion contains the chemically treated carbon black at a level of at least about 25% by weight, the liquid phase of the dispersion comprising greater than 90% water by weight and less than 5 g of dispersant per 100 g carbon black.

10. The method of any of claims 6, 8, and 9, further comprising preparing the dispersion of chemically treated carbon black by stirring an undispersed modified carbon black dry powder free from milling media into an aqueous vehicle at a concentration of at least about 25% by weight, based on the final weight of the dispersion, to form a carbon black dispersion, the aqueous vehicle comprising a solvent that includes greater than 90% water by weight and less than 5 g of dispersant per 100 g carbon black.

11. The method of any of claims 6 and 8-10, wherein less than 10% by volume of the modified carbon black in the dispersion has a particle size of greater than 0.5 µm.

12. The method of any of claims 6 and 8-11 wherein the dispersion is mixed using only low shear stirring or mixing.

13. The method of claim 6, wherein the mixture of cement and aggregate is a slurry further comprising water.

14. The method of claim 6, further comprising adding water to the mixture of cement and aggregate either before or during combining.

15. The method of any of claims 6 and 9-14, wherein the aqueous dispersion of chemically treated carbon black comprises all the water necessary to mix and set the mixture of cement and aggregate.

## Patentansprüche

1. Eine Mauerwerkszusammensetzung, umfassend:
ein mineralisches Bindemittel; und
ein chemisch behandeltes Rußprodukt, das gleichmäßig in der Zusammensetzung dispergiert ist, wobei der chemisch behandelte Ruß einen Ruß umfasst, an den eine organische Gruppe, einschließlich einer ionischen oder einer ionisierbaren Gruppe, gebunden ist, wobei die ionische oder ionisierbare Gruppe in einer Menge von 1,0 bis 3,0 µmol/m² vorhanden ist, wobei der Ruß einen STSA-Wert zwischen 20 und 300 m²/g, gemessen vor der Behandlung, aufweist.

2. Mauerwerkszusammensetzung nach Anspruch 1, wobei der chemisch behandelte Ruß in einer Menge von 1 bis 20 Gew.-% vorhanden ist.

3. Mauerwerkszusammensetzung nach Anspruch 1 oder 2, wobei die Zusammensetzung einen Schwärzegrad (L*) von höchstens 33 aufweist.

4. Mauerwerkszusammensetzung nach einem der Ansprüche 1 bis 3, wobei der Schwärzegrad der Zusammensetzung nach 400 Stunden bei 100 % Feuchtigkeit unter 33 bleibt.

5. Mauerwerkszusammensetzung nach einem der Ansprüche 1 bis 4, wobei der chemisch behandelte Ruß eine durchschnittliche Primärteilchengröße von 15 bis 50 nm aufweist.

6. Verfahren zur Herstellung einer pigmentierten Mauerwerkszusammensetzung, umfassend:
a) Mischen einer trockenen Mischung aus Zement und Zuschlagstoffen mit einem pulverisierten oder pelletierten chemisch behandelten Ruß, um eine pigmentierte Mischung herzustellen, und Mischen der pigmentierten Mischung mit Wasser, um eine pigmentierte Aufschlämmung herzustellen; oder
b) Mischen einer ungehärteten Mauerwerksaufschlämmung mit einem chemisch behandelten Ruß, um eine pigmentierte Aufschlämmung zu bilden; oder
c) Kombinieren einer Mischung aus Zement und Zuschlagstoffen mit einer wässrigen Dispersion von chemisch behandeltem Ruß, um eine pigmentierte Aufschlämmung zu erzeugen,
wobei der chemisch behandelte Ruß eine organische Gruppe enthält, die eine ionische oder ionisierbare Gruppe umfasst, wobei die ionische oder ionisierbare Gruppe in einer Menge von 1,0 bis 3,0 µmol/m² vorhanden ist, wobei der Ruß einen STSA-Wert zwischen 20 und 300 m²/g, gemessen vor der Behandlung, aufweist.

7. Verfahren nach Anspruch 6, wobei der chemisch behandelte Ruß, der mit der nicht ausgehärteten Mauerwerksaufschlämmung gemischt wird, in Form eines Pulvers oder Pellets vorliegt.

8. Verfahren nach Anspruch 6, wobei der chemisch behandelte Ruß, der mit der nicht ausgehärteten Mauerwerksaufschlämmung gemischt wird, in Form einer wässrigen Dispersion vorliegt.

9. Verfahren nach Anspruch 6 oder 8, wobei die wässrige Dispersion den chemisch behandelten Ruß in einem Anteil von mindestens etwa 25 Gew.-% enthält und die flüssige Phase der Dispersion mehr als 90 Gew.-% Wasser und weniger als 5 g Dispergiermittel pro 100 g Ruß enthält.

10. Verfahren nach einem der Ansprüche 6, 8 und 9, ferner umfassend das Herstellen der Dispersion von chemisch behandeltem Ruß durch Einrühren eines nicht dispergierten modifizierten Ruß-Trockenpulvers, das frei von Mahlmedien ist, in einen wässrigen Träger in einer Konzentration von mindestens etwa 25 Gew.-%, bezogen auf das Endgewicht der Dispersion, um eine Rußdispersion zu bilden, wobei der wässrige Träger ein Lösungsmittel umfasst, das mehr als 90 Gew.-% Wasser und weniger als 5 g Dispergiermittel pro 100 g Ruß enthält.

11. Verfahren nach einem der Ansprüche 6 und 8-10, wobei weniger als 10 Vol.-% des modifizierten Rußes in der Dispersion eine Teilchengröße von mehr als 0,5 µm aufweisen.

12. Verfahren nach einem der Ansprüche 6 und 8-11, wobei die Dispersion nur unter Rühren oder Mischen mit geringer Scherung gemischt wird.

13. Verfahren nach Anspruch 6, wobei das Gemisch aus Zement und Zuschlagstoff eine Aufschlämmung ist, die außerdem Wasser enthält.

14. Verfahren nach Anspruch 6, das ferner die Zugabe von Wasser zu der Mischung aus Zement und Zuschlagstoffen entweder vor oder während des Kombinierens umfasst.

15. Verfahren nach einem der Ansprüche 6 und 9 bis 14, wobei die wässrige Dispersion von chemisch behandeltem Ruß das gesamte Wasser umfasst, das zum Mischen und Abbinden der Mischung aus Zement und Zuschlagstoffen erforderlich ist.

## Revendications

1. Composition de maçonnerie comprenant :
un liant minéral ; et
un produit à base de noir de carbone chimiquement traité, dispersé uniformément dans toute la composition, le noir de carbone chimiquement traité comprenant un noir de carbone auquel est fixé un groupe organique incluant un groupe ionique ou ionisable, le groupe ionique ou ionisable étant présent à raison de 1,0 à 3,0 µmol/m², où le noir de carbone a une STSA entre 20 et 300 m²/g telle que mesurée avant traitement.

2. Composition de maçonnerie selon la revendication 1 dans laquelle le noir de carbone chimiquement traité est présent à raison de 1 à 20 % en poids.

3. Composition de maçonnerie selon la revendication 1 ou 2 dans laquelle la composition a une profondeur de noir (L*) de 33 au plus.

4. Composition de maçonnerie selon l'une quelconque des revendications 1 à 3 dans laquelle la profondeur de noir de la composition reste en dessous de 33 après 400 heures à une humidité de 100 %.

5. Composition de maçonnerie selon l'une quelconque des revendications 1 à 4 dans laquelle le noir de carbone chimiquement traité a une taille moyenne des particules primaires comprise entre 15 et 50 nm.

6. Procédé de préparation d'une composition de maçonnerie pigmentée comprenant les étapes consistant à :
a) mélanger un mélange sec de ciment et d'agrégat avec un noir de carbone chimiquement traité qui est en poudre ou sous forme de granulés, pour produire un mélange pigmenté, et mélanger le mélange pigmenté avec de l'eau pour produire une bouillie pigmentée ; ou
b) mélanger une bouillie de maçonnerie non durcie avec un noir de carbone chimiquement traité pour former une bouillie pigmentée ; ou
c) combiner un mélange de ciment et d'agrégat avec une dispersion aqueuse de noir de carbone chimiquement traité pour produire une bouillie pigmentée,
dans lequel le noir de carbone chimiquement traité inclut un groupe organique comprenant un groupe ionique ou ionisable, le groupe ionique ou ionisable étant présent à raison de 1,0 à 3,0 µmol/m², où le noir de carbone a une STSA entre 20 et 300 m²/g telle que mesurée avant traitement.

7. Procédé selon la revendication 6, dans lequel le noir de carbone chimiquement traité qui est mélangé avec la bouillie de maçonnerie non durcie est sous la forme d'une poudre ou de granulés.

8. Procédé selon la revendication 6, dans lequel le noir de carbone chimiquement traité qui est mélangé avec la bouillie de maçonnerie non durcie est sous la forme d'une dispersion aqueuse.

9. Procédé selon la revendication 6 ou 8, dans lequel la dispersion aqueuse contient le noir de carbone chimiquement traité à raison d'au moins environ 25 % en poids, la phase liquide de la dispersion comprenant plus de 90 % d'eau en poids et moins de 5 g de dispersant pour 100 g de noir de carbone.

10. Procédé selon l'une quelconque des revendications 6, 8, et 9, comprenant en outre l'étape consistant à préparer la dispersion de noir de carbone chimiquement traité par agitation d'une poudre sèche de noir de carbone modifié non dispersé exempte d'agent de mouture dans un véhicule aqueux à une concentration d'au moins environ 25 % en poids, par rapport au poids final de la dispersion, pour former une dispersion de noir de carbone, le véhicule aqueux comprenant un solvant qui inclut plus de 90 % d'eau en poids et moins de 5 g de dispersant pour 100 g de noir de carbone.

11. Procédé selon l'une quelconque des revendications 6 et 8 à 10, dans lequel moins de 10 % en volume du noir de carbone modifié dans la dispersion a une taille de particule supérieure à 0,5 µm.

12. Procédé selon l'une quelconque des revendications 6 et 8 à 11, dans lequel la dispersion est mélangée uniquement par malaxage ou agitation sous faible cisaillement.

13. Procédé selon la revendication 6, dans lequel le mélange de ciment et d'agrégat est une bouillie comprenant en outre de l'eau.

14. Procédé selon la revendication 6, comprenant en outre l'étape consistant à ajouter de l'eau au mélange de ciment et d'agrégat soit avant, soit pendant la combinaison.

15. Procédé selon l'une quelconque des revendications 6 et 9 à 14, dans lequel la dispersion aqueuse de noir de carbone chimiquement traité comprend toute l'eau nécessaire pour mélanger et faire prendre le mélange de ciment et d'agrégat.
